**Europäisches Patentamt**

**European Patent Office**

**Office européen des brevets**

(11) Veröffentlichungsnummer: **0 256 976**
**A2**

(12) # EUROPÄISCHE PATENTANMELDUNG

(21) Anmeldenummer: **87810413.2**

(22) Anmeldetag: **22.07.87**

(51) Int. Cl.4: **B 64 F 1/315**

(30) Priorität: **14.08.86 CH 3266/86**

(43) Veröffentlichungstag der Anmeldung:
**24.02.88 Patentblatt 88/08**

(84) Benannte Vertragsstaaten:
**AT BE CH DE FR GB LI LU NL SE**

(71) Anmelder: **Gebrüder Frech AG**
**Zunzgerstrasse 24-26**
**CH-4450 Sissach (CH)**

(72) Erfinder: **Riner, Felix**
**Sonnhalde 811**
**CH-5262 Frick (CH)**

(74) Vertreter: **Feldmann, Paul David et al**
**c/o Patentanwaltsbüro FELDMANN AG Kanalstrasse 17**
**CH-8152 Glattbrugg (CH)**

(54) **Fahrbare Flugzeugtreppe.**

(57) Die fahrbare, teleskopisch zusammenschiebbare Flugzeugtreppe umfasst ein Fahrzeug (I), die aus zwei Teilen (2I,22) bestehende Treppe mit einer Einstiegplattform (3) und ein Dach (4). Das Dach umfasst drei teleskopisch übereinander schiebbare Teile (40,4I,42). Die unteren Dachteile (40,4I) sind durch Stützen (20,23) fest mit den diesbezüglichen Treppenteilen (2I,22) verbunden. Der oberste Dachteil (42) dagegen ist mittels am Plattformboden schwenkbar angelenkten Stützen (30) gehalten, die beim zusammenschieben der Treppenteil nach rückwärts schwenken. Dadurch lässt sich der oberste, die Plattform überdeckende Dachteil (42') soweit absenken, bis er sich auf dem Niveau des Plattform-Geländers befindet.

Fig.2

EP 0 256 976 A2

**Beschreibung**

## FAHRBARE FLUGZEUGTREPPE

Die Erfindung bezieht sich auf eine fahrbare, teleskopisch zusammenschiebbare Flugzeugtreppe mit Dach, von dem mindestens einige Dachteile gemeinsam mit den Treppenteilen teleskopisch übereinander schiebbar sind. Bei bekannten Treppen dieser Art ist es beim Andocken der Treppe an den Flugzeugrumpfkaum möglich, einen exakten Anschluss des Daches an den Rumpf zu erzielen. Man hat bisher eine dichte Anpassung des Treppendaches mit Hilfe eines dicken Gummiwulstes oder mittels einer Markise zu erreichen versucht. Derartige Markisen sind teuer und störungsanfällig, während ein Gummiwulst oft die Flugzeugwand rammt. Ein weiterer für den Flughafenbetrieb wichtige Forderung ist, dass eine fahrbare Flugzeugtreppe in zusammengeschobenen Lage möglichst niedrig sein sollte. Sie sollte unter den Fingerdocks hindurchfahren können und bei Nichtgebrauch in eine Halle einfahren können, damit sie nich ständig im Freien stehen muss.
stehen muss.

Die Durchfahrthöhe der meisten Hallentore ist auf 4,5m beschränkt. Bisher bekannte fahrbare, voll überdachte Flugzeugtreppe waren, auch in zusammengeschobener Lage hierfür zu hoch.

Die Erfindung stellt sich daher die Aufgabe eine zusammenschiebbare, fahrbare Flugzeugtreppe zu schaffen, die in zusammengeschobenem Zustand möglichst niedrig ist und zugleich ein exaktes Anschliessen des Daches an den Flugzeugrumpf gewährleistet, ohne dass dabei die Gefahr bestehtdie Flugzeugwand zu rammen.

Die Erfindung löst diese Aufgabe mit einer fahrbaren Flugzeugtreppe, welche die Merkmale des Patentanspruches I aufweist.

In der beigefügten Zeichnung ist ein Ausführungsbeispiel des Erfindungsgegenstandes dargestellt.

Es zeigt:

Figur I die Treppe in ausgefahrenem Zustand beim Andocken und

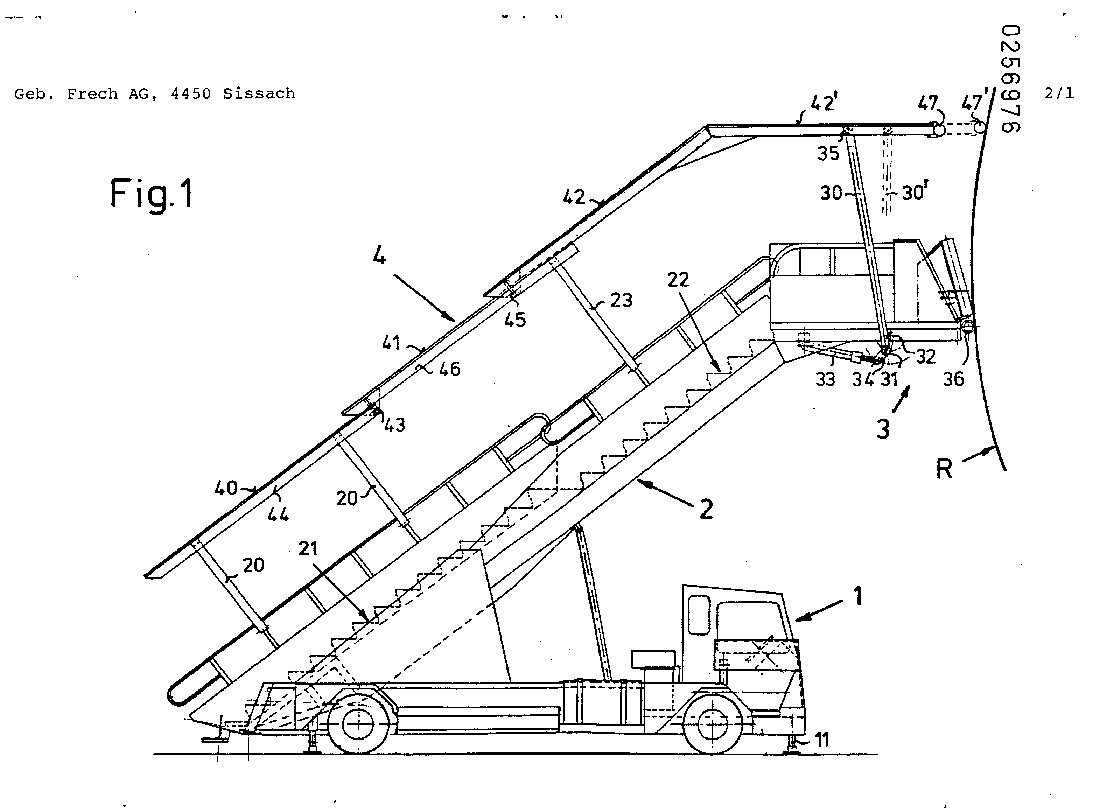

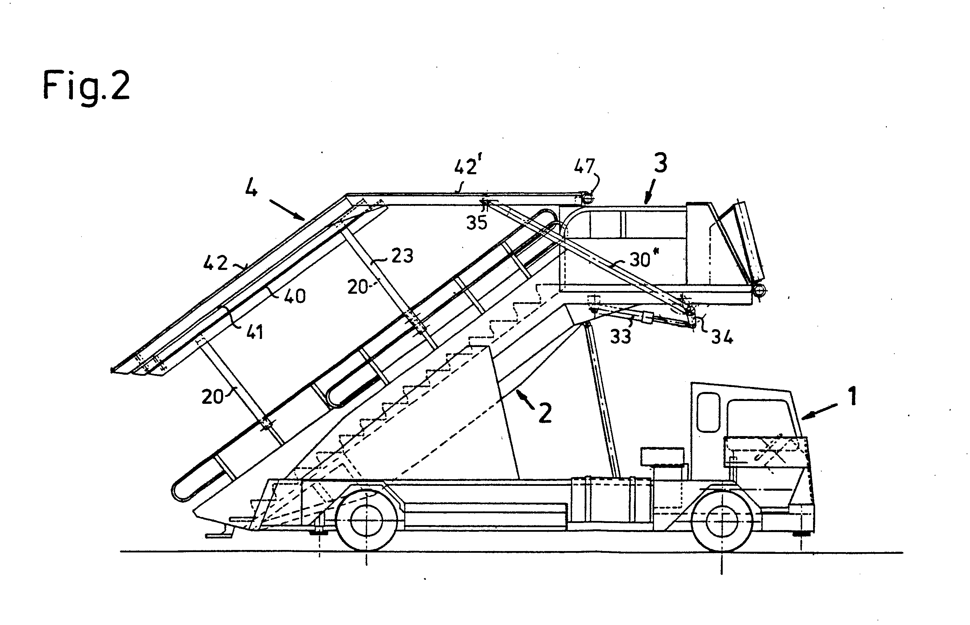

Figur 2 dieselbe Treppe in zusammengeschobenem Zustand.

In der Zeichnung ist das Fahrzeug als Ganzes mit I, die teleskopisch zusammenschiebbare Treppe als Ganzes mit 2, die Einstiegplattform mit 3 und das Dach der Treppe mit 4 bezeichnet. Der untere Dachteil 40 ist mittels vier seitlichen Stützen 20 fest mit dem unteren Treppenteil 2I verbunden.

Der mittlere Dachteil 4I ist mittels zwei seitlichen Stützen 23 mit dem oberen Treppenteil 22 verbunden. Der mittlere Dachteil 4I ist breiter als der untere Dachteil 40. Er hat an seinem unteren Ende seitliche Ankerplatten 43 an denen nach innen ragende Rollen befestigt sind, die in Führungskulissen 44 des untersten Dachteiles 40 geführt sind.

Die Einstiegplattform 3 ist fest mit dem oberen Treppenteil 22 verbunden. Dachteil 42,42' überdeckt sowohl die Einstiegplattform als auch die obersten Stufen des oberen Treppenteiles 22. Dachteil 42 weist daher in Seitenansicht eine geknickte Form auf. Dachteil 42 ist nochmals breiter als Dachteil 4I.

An seinem unteren Ende sind Ankerplatten 45 mit nach innen ragenden Rollen angebracht, die in seitlichen Führungskulissen 46 des mittleren Dachteiles 4I geführt sind. Der annähernd horizontale Dachteil 42' wird von beidseitig der Plattform 3 schwenkbar gelagerten Stützen 30 gehalten. Diese beidseitig der Plattform angeordneten Stützen 30 sind durch eine Welle 3I miteinander zu einem U-förmigen Rahmen verbunden, der bei 32 unter dem Plattformboden gelagert ist. Ein Hydraulikantrieb 23 greift einen auf der Welle befestigten Hebel 34 an. Durch Betätigung des Hydraulikantriebes kann die Winkellage der Stützen 30 bezüglich der Plattform verstellt werden.

Die beschriebene Hebelanordnung ist kinematisch bedingt. Die beiden seitlichen Stützen 30 sind bei 35 schwenkbar unten am Dachteil 42' angelenkt.

Die Treppe ist in Figur I in voll ausgefahrenem und in Figur 2 in ganz zusammengeschobenem Zustand dargestellt. Die Höhe der Einstiegplattform 3 kann gegenüber der voll ausgefahrenen Höhe um jeweils eine Stufe verringert werden, indem die Treppe nicht ganz ausgefahren wird.

Beim Betrieb wird das Fahrzeug mit der Treppe zuerst nahe an ein Flugzeug herangefahren und die Treppe bis auf die erforderliche Höhe ausgefahren. Befindet sich die Einstiegplattform 3 auf der Höhe der Einstiegtüre des Flugzeuges, wird die Treppe langsam und vorsichtig an den Flugzeugrumpf herangefahren bis der Gummiwulst 36 satt am Rumpf anliegt, wie dies in Figur I dargestellt ist. In dieser Figur ist die Kontur des Rumpfes durch die Linie R angedeutet. Jetzt werden die hydraulisch betätigten Abstützplatten II des Fahrzeuges I ausgefahren damit Fahrzeug und Treppe stabil auf dem Boden stehen. Bis jetzt ist der oberste Dachteil erst teilweise ausgefahren, beispielsweise wie in Figur I mit ausgezogenen Linien dargestellt.

Durch vorsichtiges Betätigen des Hydraulikantriebes 33 wird nun der Dachteil 42 weiter ausgefahren bis dessen Gummiwulst 47 in die durch unterbrochene Linien dargestellt Lage 47' satt am Flugzeugrumpf anliegt. Die Stütze 30 gelangt dabei in die durch 30' angedeutete Lage. Dadurch sind die einsteigenden Passagiere und die Einstiegöffnung des Flugzeuges selber vor Regen, Schnee oder Hagel geschützt.

Durch dieses stufenweise Vorgehen wird auch vermieden, dass die Dachvorderkante den Flugzeugrumpf rammt.

Beim Wegfahren der Treppe werden die oben beschriebenen Vorgänge in umgekehrter Reihenfolge wiederholt. Allerdings braucht dabei nicht unbedingt die Vorderkante 47 des oberen Dachteiles zuerst zurückgezogen zu werden. In voll zusammengeschobenem Zustand ist die Stütze 30 nach rückwürts geschwenkt und befindet sich in der Lage 30". Dadurch kann der oberste Dachteil 42' soweit abgesenkt werden, dass er sich auf dem Niveau des Geländers der Plattform befindet.

Bei einer Flaugzeugtreppe, deren Einstiegplattform sich bei voll ausgefahrener Treppe auf 5,l5m und das zuoberste Dach sich auf 7,62m über dem Boden befindet, beträgt die grösste Höhe über dem Boden, bei ganz zusammengeschobener Lage nur noch 4,30m über dem Boden. Dadurch ist die zu Anfang erwähnte Forderung, dass die Treppe durch ein Hallentor mit einer Einfahrtshöhe von 4,50m einfahren kann erfüllt.

## Patentansprüche

I. Fahrbare, teleskopisch zusammenschiebbare Flugzeugtreppe mit Dach, von dem mindestens einige Dachteile gemeinsam mit den Treppenteilen teleskopisch übereinander schiebbar sind, dadurch gekennzeichnet, dass der zuoberste Teil des Daches (42), welcher die oberen Treppenstufen (22) und die Anschluss-Einstieg-plattform (3) abdeckt, von beidseitig der Plattform angebrachten schwenkbaren Stützen (30) gehalten ist, die in zusammengeschobener Lage der Treppe ein Absenken und Aufschieben des zuobersten Dachteiles (42,42') auf die unteren teleskopisch zusammengeschobenen Dachteile (40,4l) erlaubt.

2. Fahrbare Flugzeugtreppe nach Anspruch l, dadurch gekennzeichnet, dass die schwenkbaren Stützen (30) mit einer eigenen Antriebsvorrichtung (33) versehen sind.

3. Fahrbare Flugzeugtreppe nach Anspruch l, dadurch gekennzeichnet, dass der in ausgefahrenem Zustand zuunterste Dachteil (40) am schmälsten der mittlere Dachteil (4l) oder Teile breiter und der zuoberste Dachteil (42,42') am breitesten ist, wobei die unteren Dachteile seitliche Führungskulissen (44,46) aufweisen in die seitliche, nach innen ragende Rollen (43,45) der oberen Dachteile (4l,42) geführt sind.

Fig.1

Geb. Frech AG, 4450 Sissach

2/2

0256976

Fig.2